# EUROPÄISCHE PATENTSCHRIFT

(11) **EP 1 095 551 B1**
(45) Veröffentlichungstag und Bekanntmachung des Hinweises auf die Patenterteilung: **14.04.2004**
(21) Anmeldenummer: 00123251.1
(22) Anmeldetag: 26.10.2000
(51) Int. Cl.: A01B 73/00, A01D 34/66

(54) **Landwirtschaftliche Maschine**
Agricultural machine
Machine agricole

(30) Priorität: 29.10.1999 DE 29919026 U
(43) Veröffentlichungstag der Anmeldung: 02.05.2001
(73) Patentinhaber: Fella-Werke GmbH & Co. KG, 90537 Feucht bei Nürnberg (DE)
(72) Erfinder: Kohl, Bernhard, 90537 Feucht (DE); Pürrer, Josef, 90537 Feucht (DE)
(74) Vertreter: Grünecker, Kinkeldey, Stockmair & Schwanhäusser Anwaltssozietät

(56) Entgegenhaltungen:
- EP-A- 0 486 413
- DE-A- 3 641 546
- FR-A- 2 691 319
- GB-A- 2 082 436
- US-A- 4 682 462
- US-A- 4 768 334

## Beschreibung

Die Erfindung betrifft eine landwirtschaftliche Maschine gemäß Oberbegriff des Anspruchs 1.

Wegen ihrer kostengünstigen Bauweise und einfachen Handhabung sind Mähwerke für den Heck-Dreipunktanbau in der Praxis weit verbreitet. Zur Steigerung der Flächenleistung ist die Nachfrage nach Mähwerken mit größerer Arbeitsbreite gestiegen. Die maximal mögliche Arbeitsbreite der seitlich ausladenden Heckenanbaumähwerke, insbesondere wenn sie mit Aufbereitern ausgerüstet sind, ist jedoch wegen der einseitigen Gewichtsbelastung des Schleppers begrenzt.

Für den Straßentransport werden derartige Mähwerke in eine Position hinter dem Schlepper geschwenkt. Der Schwerpunkt ist dabei weit von der Schlepperhinterachse entfernt, so dass die Vorderachse entlastet, und das Lenkverhalten des Schleppers unsicher wird. Zur Vermeidung dieses Nachteils sind auch bereits Mähwerke mit einem Stützrad bekannt, über welches das Maschinengewicht sowohl in Arbeits- als auch in Transportstellung abgestützt wird. Dieses Stützrad muss für die Arbeitsstellung als selbstlenkendes Nachlaufrad ausgebildet sein, während es für die Transportstellung so fixiert sein soll, dass es die Führung des Mähwerkes übemehmen kann. Das Schwenkgelenk zwischen Anbaurahmen und Mähwerk wird in Transportstellung nicht fixiert, so dass das Mähwerk durch das Stützrad geführt wie ein Einachsenanhänger hinter dem Schlepper läuft und bei Kurvenfahrt nicht seitlich ausschert. In Arbeitsstellung muss das Stützrad hinter dem Mähwerk angeordnet sein, damit es nicht im Futter läuft. In Transportstellung dagegen kann es für eine bessere Gewichtsverteilung Vorteilhafterweise auch mittig hinter der Maschine angeordnet sein. Das weit seitlich ausladende Mähwerk ist durch Anfahren an Hindernisse gefährdet, weil der Schlepperfahrer den Seitenabstand der Mähwerkaußenkante zu einem Hindernis nur schwer abschätzen kann. Es ist daher eine sogenannte Anfahrsicherung notwendig, welche ein selbsttätiges Nachhintenschwenken des Mähwerkes beim Auftreffen auf ein Hindernis ermöglicht. Für die notwendigen Stellvorgänge wie Ausheben des Mähwerkes, eventuelle Positionsänderung des Stützrades, Arretierung der Stützradschwenkachse und Fixierung bzw. Freigabe der Schwenkachse zwischen Mähwerk und Anbauträger sind umfangreiche hydraulische Stellelemente, welche in einer bestimmten Reihenfolge betätigt werden müssen, erforderlich.

Bei einer aus EP 0 486 413 A bekannten landwirtschaftlichen Maschine der eingangs genannten Art wird die Fixiereinrichtung für die Stützradachse nur in Abhängigkeit davon im Sinne einer Feststellung der Stützradachse betätigt, ob der Radausleger seine Transportposition relativ zum Tragarm erreicht hat, oder nicht. Dies bedeutet, dass die Stützradachse und mit der Stützradachse das Stützrad unabhängig davon, ob die Arbeitseinheit ausgehoben ist oder nicht, und ob der Tragarm mit der Arbeitseinheit in der Arbeitsstellung festgelegt ist oder nicht, immer dann in die der Transportstellung entsprechende Lage gebracht werden, wenn der Radausleger seine Transportposition erreicht hat und in dieser gehalten wird. Die Fixiereinrichtung ist ein vom Radausleger gesteuerter Zwangsausrichtmechanismus.

Bei einer aus FR 26 91 319 A bekannten landwirtschaftlichen Maschine wird das an einem stationär am Tragarm angebrachten Radausleger angelenkte Stützrad in einer bestimmten Orientierung für die Transportfahrt verriegelt, indem ein hierfür vorgesehener Hydraulikzylinder beaufschlagt wird. Die Betätigung der Stellglieder zum Ausheben der Arbeitseinheit hat hierauf keinen Einfluss.

Bei einer aus US-A 4 768 334 bekannten landwirtschaftlichen Maschine werden an sich selbstlenkende Stützräder am freien Ende des Tragarms mittels eines Hydraulikzylinders in eine Transportstellung geschwenkt und gehalten, sobald ein Verriegelungszapfen gelöst wird, der den Tragarm mit der Arbeitseinheit in der Arbeitsstellung verriegelt.

Bei einer aus US-A 4 682 462 bekannten landwirtschaftlichen Maschine werden die äußeren Stützräder in der Transportstellung freigestellt, damit sie selbstlenkend nachlaufen. In der Arbeitsstellung werden die Stützräder hingegen blockiert.

Weiterer Stand der Technik ist enthalten in GB 2 082 436 A und DE 36 41 546 A.

Der Erfindung liegt die Aufgabe zugrunde, eine einfach bedienbare, betriebssichere und wirtschaftlich herstellbare landwirtschaftliche Maschine der eingangs genannten Art auszugestalten.

Die gestellte Aufgabe wird erfindungsgemäß mit den Merkmalen des Anspruchs 1 gelöst.

Die Wirkverbindung stellt sicher, dass die Stützradachse zuverlässig dann festgelegt wird, wenn die Arbeitseinheit ausgehoben wird und die Arretiervorrichtung bewusst gelöst ist. Hingegen bleibt das Stützrad bei allen anderen Betriebszuständen der Maschine selbstlenkend.

Funktionell einfach wird die Fixiereinrichtung durch einen Hydraulikzylinder betätigt.

Zweckmäßig ist der Hydraulikzylinder für die Fixiereinrichtung hydraulisch mit der Druckbeaufschlagung der Aushebezylinder der Arbeitseinheit gekoppelt, derart, dass der Hydraulikzylinder unter dem hohen, ohnedies vorhandenen Beaufschlagungsdruck zum Ausheben der Arbeitseinheit auch die Stützradachse festlegt.

Die hydraulische Verschaltung hinsichtlich des gewünschten Sicherheitsaspekts der Fixiereinrichtung enthält zweckmäßigerweise ein Steuerventil, das nur in der Transportposition des Radträgers die Beaufschlagung des Hydraulikzylinders ermöglicht. In der Arbeitsposition des Radträgers ist der Zufluss zum Hydraulikzylinder hingegen gesperrt. Da dann der Ölabfluss aus dem Hydraulikzylinder möglich ist, bleibt die Fixiereinrichtung zuverlässig ausgerückt.

Alternativ oder additiv ist das Steuerventil auch mit einer Betätigungseinrichtung für die Arretiervorrichtung verbunden. Die Arretiervorrichtung fixiert die Maschine in der Arbeitsstellung in der seitlich ausladenden Lage. Der Ölzufluss zum Hydraulikzylinder ist dann gesperrt, so dass die Fixiereinrichtung passiv ist. Bei gelöster Arretiervorrichtung ist der Ölfluss zum Hydraulikzylinder frei, so dass der Beaufschlagungsdruck der Aushebezylinder die Stützradachse festlegt. Dabei ist vorauszusetzen, dass die Arretiervorrichtung bewusst gelöst ist, und nicht nur als Anfahrsicherung angesprochen hat.

Mittels zweier um 180° versetzter Steuerrollen an der Stützradachse, die mit einer Anpressplatte des Hydraulikzylinders kooperieren, wird die Stützradachse aus jeder momentanen Lage in die gewünschte, für die Transportfahrt zweckmäßige Lage gedreht und in dieser Lage fixiert, solange die Arbeitseinheit ausgehoben und die Arretiervorrichtung bewusst gelöst sind.

Als weiterer Sicherheitsaspekt wird zweckmäßig der Radträger in der Transportposition blockiert, wenn die Arbeitseinheit ausgehoben wird oder ist. Dies trägt dazu bei, Beschädigungen aufgrund zu hoher, durch das Gewicht der Arbeitseinheit bedingter Kräfte zu vermeiden. Baulich einfach erfolgt dies durch Blockieren des den Radträger verstellenden, doppelt wirkenden Hydraulikzylinders. Zweckmäßig ist hierzu ein Ventil vorgesehen, das mit dem Aushebedruck der Aushebezylinder in eine Sperrstellung vorgesteuert und in eine Arbeitsleitung des Hydraulikzylinders eingesetzt wird, welche für das Einstellen und Halten der Transportposition verantwortlich ist.

Anhand der Zeichnung werden Ausführungsformen des Erfindungsgegenstandes erläutert. Es zeigen:
- Fig. 1: eine Perspektivansicht einer landwirtschaftlichen Maschine in Form eines Anbaumähwerks in Arbeitsstellung,
- Fig. 2: eine Perspektivansicht der Maschine in Transportstellung,
- Fig. 3: eine vergrößerte perspektivische Teilansicht zur Transportstellung, und
- Fig. 4: eine Detailvariante.

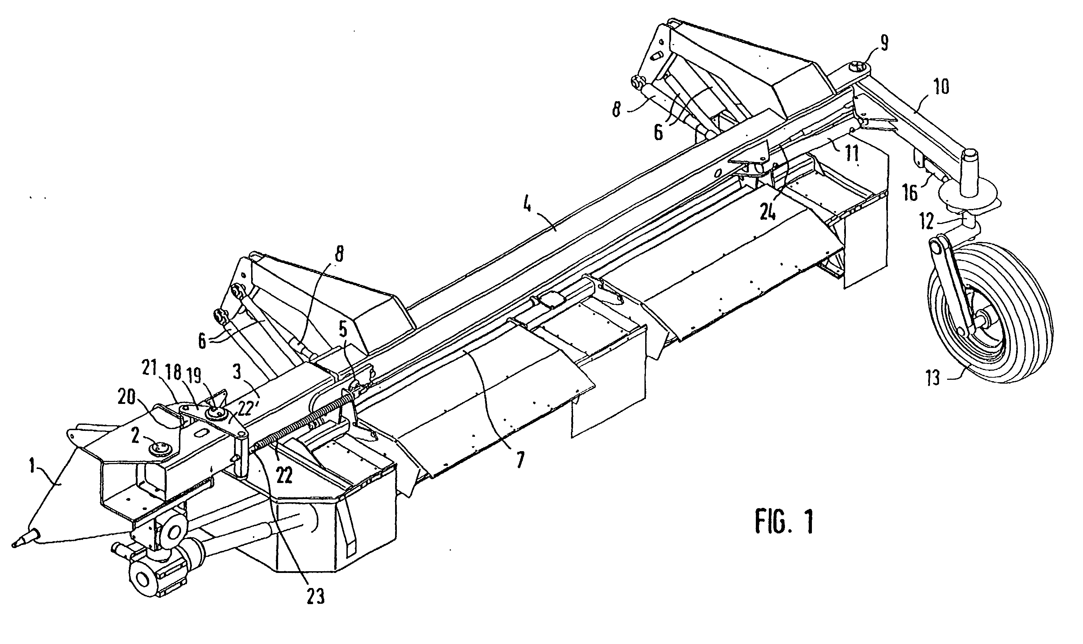

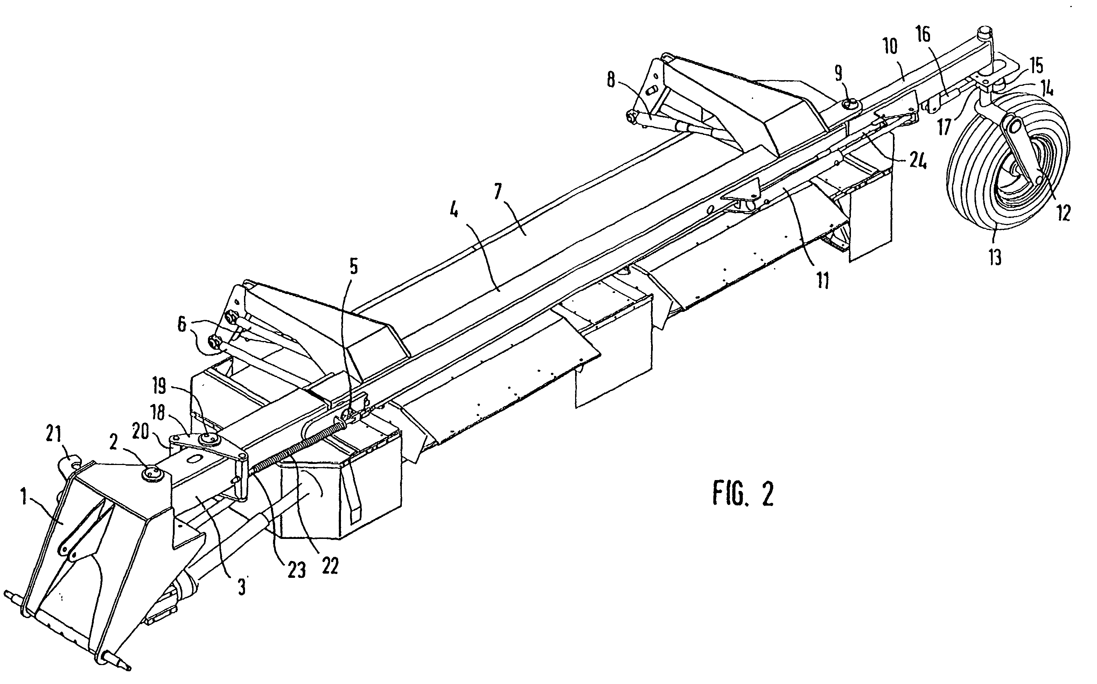

Eine landwirtschaftliche Maschine, hier ein Anbaumähwerk, der Fig. 1 bis 3, wird mit einem Anbaurahmen 1 an die Dreipunkt-Hebevorrichtung eines nicht gezeigten Schleppers angeschlossen. Mit dem Anbaurahmen 1 ist über eine vertikale Gelenkachse 2 ein Tragarm 3 verbunden, an welchem über eine horizontale Achse 5 ein Mähwerksträger 4 angelenkt ist. Ein Arbeitseinheit 7 (eine Mäheinheit) ist mit Lenkern 6 höhenbeweglich geführt. Über Hydraulikzylinder 8 kann die Arbeitseinheit für ausreichende Bodenfreiheit am Feldende und zum Straßentransport ausgehoben werden. Die Hydraulikzylinder 8 als Aushebezylinder und die Lenker 6 bilden Stellglieder für die Mäheinheit. Am Mähwerksträger 4 ist in einer vertikalen Schwenkachse 9 ein Radträger 10 angelenkt. Der Radträger 10 ist über einen doppelt wirkenden Hydraulikzylinder 11 aus einer Arbeitsposition (Fig. 1) in eine Transportposition (Fig. 2) und umgekehrt verstellbar.

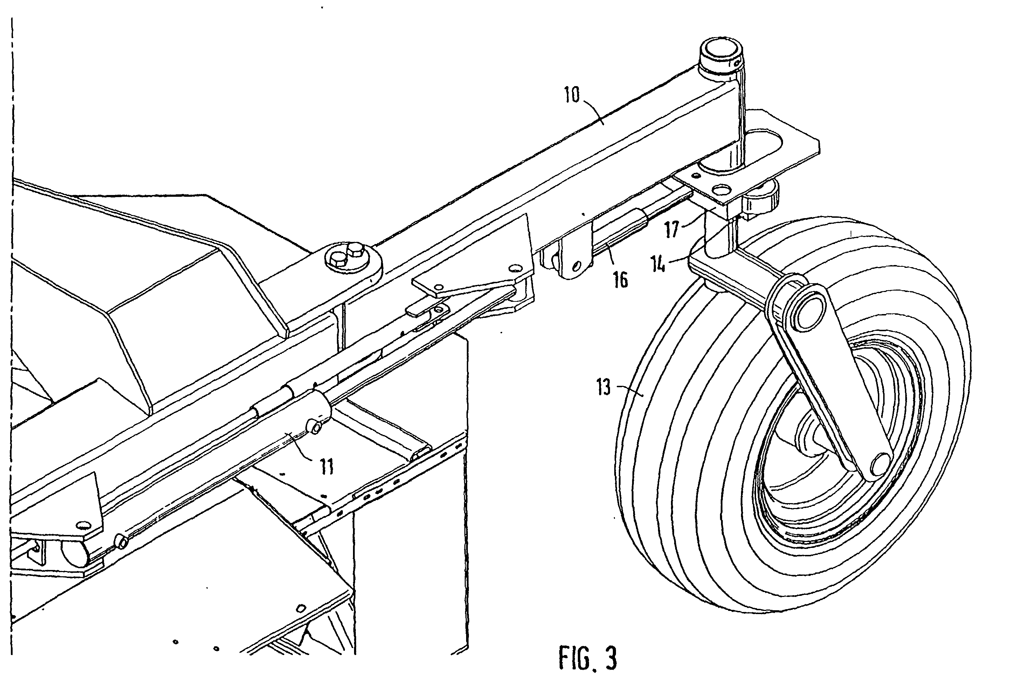

Am äußeren Ende des Radträgers 10 ist eine drehbare Stützradachse 12 gelagert, die ein Stützrad 13 trägt. An einem fest mit der Stützradachse 12 verbundenen Doppelhebel 14 sind um 180° versetzt zwei Steuerrollen 15 gelagert. Am Radträger 10 ist ein bei dieser Ausführungsform einfach wirkender Hydraulikzylinder 16 abgestützt, der über eine Anpressplatte 17 mit beiden Steuerrollen 15 zusammenwirken kann. Diese Komponenten bilden eine Fixiereinrichtung für die Stützradachse 12. Mittels der über den Hydraulikzylinder 16 verstellbaren Anpressplatte 17 lässt sich über die Steuerrollen 15 die ansonsten frei drehbare Stützradachse 12 in eine für die Transportfahrt geeigneten Richtung einstellen und festlegen (Fig. 3).

Der Tragarm 3 wird in der in Fig. 1 gezeigten Arbeitsstellung mit einer Arretiervorrichtung 18 um die Gelenkachse 2 am Anbaurahmen 1 fixiert. Die Arretiervorrichtung 8 weist einen hebelförmigen Träger 22' auf, der um eine in etwa vertikale Achse 19 am Tragarm 3 schwenkbar ist und eine Arretierungsrolle 20 trägt. Am Anbaurahmen 1 ist ein Fanghaken 21 montiert, der eine Kontaktfläche für die in den Fanghaken 21 eingreifende Arretierungsrolle 20 aufweist. Diese Kontaktfläche des Fanghakens 21 ist mit einem kleinen Winkel relativ zur Kraftwirkungslinie der Arretierungsrolle um die Gelenkachse 2 geneigt, so dass die Arretiervorrichtung 18 gegen die Kraft einer die Arretierungsrolle 20 gegen die Kontaktfläche pressenden Druckfeder 22 auslösen kann, wenn die Arbeitseinheit 7 gegen ein Hindernis fährt (Anfahrsicherung).

Die Arretiervorrichtung 18 ist femer über Zugstangen 23 und 24 mit dem Radträger 10 derart verbunden, dass beim Ausschwenken des Radträgers 10 in Richtung zur Transportposition (Fig. 2) in der Arretiervorrichtung 18 der Träger 22' mit der Arretierungsrolle 20 gegen die Kraft der Druckfeder 22 um die Achse 19 schwenkt, wodurch die Arretierungsrolle 20 vom Fanghaken 21 außer Eingriff kommt und das Mähwerk um die Gelenkachse 2 zur Schwenkbewegung in Richtung zur Transportstellung freigegeben wird. Auf diese Weise lässt sich die Arretiervorrichtung bewusst lösen.

Die Umstellung der Maschine von der Arbeitsstellung in die Transportstellung bei zunächst abgesenktem Mähwerk, nicht fixierter Stützradachse 12 und in der Arbeitsposition befindlichem Radträger 10 wird in folgenden Schritten durchgeführt:
1. Lösen der Arretiervorrichtung 18 und Verschwenken des Radträgers 10 in Richtung zu seiner Transportposition durch den Hydraulikzylinder 11.
2. Ausheben der Arbeitseinheit 7 über die beiden Hydraulikzylinder 8. Dabei wird gleichzeitig der Hydraulikzylinder 16 mit Druck beaufschlagt, wodurch über die Anpressplatte 17 und die Steuerrollen 15 die Stützradachse 12 in eine für die Transportfahrt geeignete Stellung ausgerichtet und in dieser Stellung fixiert wird.
3. Beim Vorwärtsfahren des Zugfahrzeuges schwenkt das Mähwerk hinter das Zugfahrzeug und folgt diesem wie ein Einachs-Anhänger.

Die Umstellung aus der Transportstellung in die Arbeitsstellung wird bei angehobenem Mähwerk, fixierter Stützradachse 12 und in Transportposition befindlichem Radträger 10 wie folgt durchgeführt:
1. Mit dem Schlepper wird eine enge Rechtskurve vorwärts oder eine enge Linkskurve rückwärts gefahren, bis der Tragarm 2 mit der Arretierungsrolle 20 am Fanghaken 21 anliegt.
2. Die Mäheinheit wird mittels der Hydraulikzylinder 8 abgesenkt. Dadurch wird auch der Hydraulikzylinder 16 drucklos und wird die Fixierung der Stützradachse 12 freigegeben.
3. Der Radträger 10 wird vom Hydraulikzylinder 11 nach hinten hinter die Arbeitseinheit 7 geschwenkt. Über die Zugstangen 23 und 24 wird die Arretiervorrichtung 18 freigegeben, so dass die Arretierungsrolle 20 unter der Kraft der Druckfeder 22 in den Fanghaken 21 am Anbaurahmen 1 einrastet.

In eine nicht gezeigte Hydraulikleitung zwischen den Hydraulikzylindern 8 zum Ausheben des Mähwerks und dem Hydraulikzylinder 16 der Fixiereinrichtung für die Stützradachse 12 kann ein nicht gezeigtes Steuerventil eingeschaltet sein, welches bei gelöster Arretiervorrichtung 18 einen Ölstrom in beiden Richtungen erlaubt. Bei eingerasteter Arretiervorrichtung 18 sperrt das Steuerventil die Ölzufuhr zum Hydraulikzylinder 16. Der Abfluss von Öl aus dem Hydraulikzylinder 16 ist weiterhin möglich. Durch das Steuerventil wird sichergestellt, dass beim Absenken des Mähwerks die Festlegung der Stützradachse 12 aufgehoben wird, während die Stützradachse beim Ausheben des Mähwerks und gelöster Arretiervorrichtung in der Transportstellung blockiert und ausgerichtet wird. In der Arbeitsstellung ist die Stützradachse 12 frei drehbar, so dass sich das Stützrad 13 bei Kurvenfahrt und auch beim Wenden und Rangieren mit ausgehobenem Mähwerk am Vorgewende immer selbstlenkend in die jeweilige Fahrtrichtung einstellen kann.

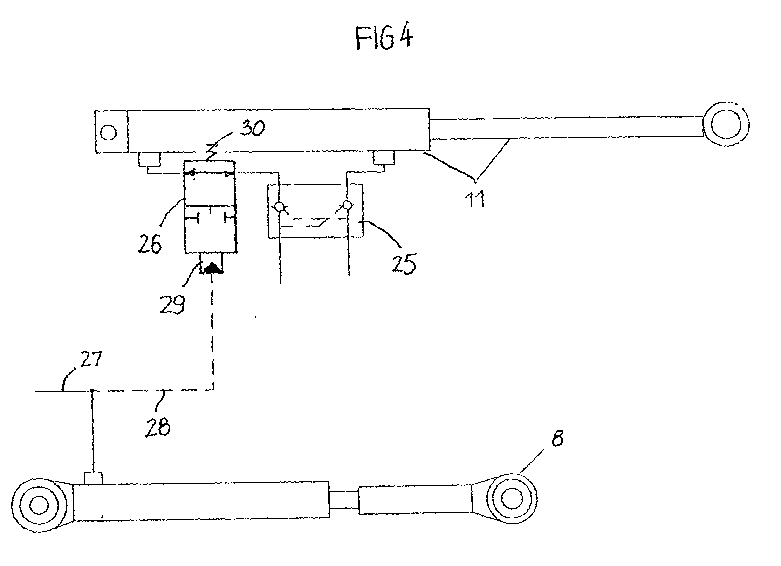

In Fig. 4 ist der Radträger 10 in seiner Transportposition blockierbar, indem der ihn betätigende, doppelt wirkende Hydraulikzylinder 11 hydraulisch blockiert wird. Der Hydraulikzylinder 11 wird über eine Ventileinrichtung 25 in der jeweiligen Bewegungsrichtung gesteuert. In einer Arbeitsleitung zum Hydraulikzylinder 11, die für die Druckbeaufschlagung zum Verschwenken des Radträgers 10 in die Transportposition verantwortlich ist, ist ein Ventil 26 eingeordnet, beispielsweise ein 2/2-Wegeventil, das durch eine Feder 30 in eine Durchgangsstellung (gezeigt) schaltbar ist, und durch eine hydraulische Vorsteuerung 29 gegen die Feder 30 in eine Sperrstellung bringbar ist. Die hydraulische Vorsteuerung 29 ist über eine Pilotleitung 28 an eine Druckversorgung 27 wenigstens eines Aushebezylinders 8 angeschlossen.

Ist der Radträger 10 in die Transportposition geschwenkt und wird die Arbeitseinheit 7 durch Betätigen der Aushebezylinder 8 ausgehoben, dann schaltet das Ventil 26 in die Sperrstellung, so dass der Hydraulikzylinder 11 hydraulisch blockiert ist. Sobald die Arbeitseinheit 7 abgesenkt und der Aushebezylinder 8 drucklos ist, geht das Ventil 26 durch die Kraft der Feder 30 selbsttätig in die gezeigte Durchgangsstellung, so dass der Hydraulikzylinder 11 wie gewünscht gesteuert werden kann. Alternativ könnte das Ventil 26 ein Magnetventil sein, das mit einem die Aushebezylinder 8 steuernden Magnetventil elektrisch gekoppelt ist.

## Patentansprüche

1. Landwirtschaftliche Maschine, insbesondere Mähwerk, zum Anbau an ein Zugfahrzeug, mit einer an einem mit wenigstens einem Tragarm (3) verbundenen Mähwerksträger (4) über Stellglieder (6, 8) aushebbar angeordneten Arbeitseinheit (7), einer lösbaren Arretiervorrichtung (18) zum Fixieren der Arbeitseinheit (7) mit dem Tragarm (3) in einer Arbeitsstellung seitlich außerhalb der Zugfahrzeugspur, wobei die ausgehobene Arbeitseinheit zum Transport auf öffentlichen Straßen um eine vertikale Gelenkachse (2) nach rückwärts in eine Transportstellung hinter dem Zugfahrzeug schwenkbar ist, mit wenigstens einem an dem Zugfahrzeug abgewandten Ende des Mähwerksträgers (4) an einem zwischen einer Transportposition und einer Arbeitsposition schwenkbaren Radträger (10) angeordneten, einen Teil des Maschinengewichts aufnehmenden Stützrad (13), einer relativ zum Radträger (10) drehbaren Stützradachse (12) für das Stützrad (13), und einer Fixiereinrichtung (14, 15, 16, 17) für die Stützradachse (12), wobei das Stützrad (13) in der Arbeitsstellung der Arbeitseinheit (7) mit der Stützradachse (12) selbstlenkend gehalten und die Stützradachse bei Betätigung der Fixiereinrichtung (14, 15, 16, 17) mit der Fixiereinrichtung in einer bestimmtem, für die Transportfahrt mit in die Transportstellung gebrachter Arbeitseinheit geeigneten Stellung festlegbar ist, **dadurch gekennzeichnet, dass** die Fixiereinrichtung (14, 15, 16, 17) zur Betätigung einen Hydraulikzylinder (16)aufweist, und dass zwischen den Stellgliedern (6, 8) und dem Hydraulikzylinder (16) der Fixiereinrichtung eine Wirkverbindung vorgesehen ist, die bei gelöster Arretiervorrichtung (18) die Fixiervorrichtung betätigt, wenn die Arbeitseinheit (7) ausgehoben wird.

2. Landwirtschaftliche Maschine nach Anspruch 1, **dadurch gekennzeichnet, dass** der Hydraulikzylinder (16) der Fixiereinrichtung (14, 15, 16, 17) mit einer Hydraulikleitung für die als Aushebezylinder ausgebildeten Stellglieder (8) der Arbeitseinheit (7) verbunden ist, derart, dass Aushebe-Beaufschlagungsdruck für die Aushebezylinder (8) dem Hydraulikzylinder (16) zuführbar ist, der durch den Beaufschlagungsdruck die Fixiereinrichtung im Sinne einer Einstellung und Festlegung der Stützradachse (12) betätigt.

3. Landwirtschaftliche Maschine nach Anspruch 2, **dadurch gekennzeichnet, dass** in einer hydraulischen Verbindungsleitung von den Aushebezylindern (8) zum Hydraulikzylinder (16) der Fixiereinrichtung (14, 15, 16, 17) ein Steuerventil angeordnet ist, welches in der Transportposition des Radauslegers (10) einen Ölstrom in beiden Durchflussrichtungen freigibt, hingegen in der Arbeitsposition des Radauslegers (10) den Zufluss zum Hydraulikzylinder (16) sperrt, jedoch den Ölabfluss aus dem Hydraulikzylinder (16) frei hält.

4. Landwirtschaftliche Maschine nach wenigstens einem der Ansprüche 1 bis 3, **dadurch gekennzeichnet, dass** das Steuerventil mit einer Betätigungseinrichtung (24, 22, 23) der Arretiervorrichtung (18) gegen die Schwenkbewegung der Arbeitseinheit (7) mit dem Tragarm (3) relativ zu einem Anbaurahmen (1) verbunden ist, derart, dass bei eingerasteter Arretiervorrichtung (18) der Ölzufluss zum Hydraulikzylinder (16) gesperrt ist, jedoch der Ölabfluss aus dem Hydraulikzylinder (16) möglich ist, und dass bei gelöster Arretiervorrichtung der Öldurchfluss in beiden Richtungen möglich ist.

5. Landwirtschaftliche Maschine nach Anspruch 1, **dadurch gekennzeichnet, dass** die Fixiereinrichtung zwei an der Stützradachse (12) an einem Doppelhebel (14) um 180° versetzte Steuerrollen (15) aufweist, gegen die eine mit dem Hydraulikzylinder (16) verbundene Anpressplatte (17) andrückbar ist, um die Stützradachse (12) in die gewünschte Richtung einzustellen und zu fixieren.

6. Landwirtschaftliche Maschine nach Anspruch 1 ,**dadurch gekennzeichnet, dass** der Radträger (10) bei ausgehobener Arbeitseinheit (7) in seiner Transportposition blockierbar ist.

7. Landwirtschaftliche Maschine nach wenigstens einem der Ansprüche 1 bis 6, **dadurch gekennzeichnet, dass** der Radträger (10) durch einen hydraulisch blockierbaren Hydraulikzylinder verschwenkbar ist, und dass der Hydraulikzylinder (11), vorzugsweise über ein gegen Federkraft in eine Sperrstellung vorgesteuertes Ventil (26) in einer Arbeitsleitung zum Hydraulikzylinder (11) hydraulisch blockierbar ist, wobei die Vorsteuerung (29) des Ventils (26) über eine Pilotleitung (28) mit der Druckversorgung (27) der als Aushebezylinder ausgebildeten Stellglieder (6) verbunden ist.

## Claims

1. Agricultural machine, in particular cutter bar, for attaching to a tractor, having a working unit (7) arranged, such that it can be lifted via control elements (6, 8), on a cutter-bar supporting beam (4) connected to at least one supporting arm (3), a releasable locking device (18) for fixing the working unit (7) together with the supporting arm (3) in a working position laterally outside the line of the tractor, the lifted working unit being pivotable about a vertical hinge pin (2) rearwards into a transporting position behind the tractor for the purpose of transporting on public roads, having at least one supporting wheel (13) which is arranged, at the end of the cutter-bar supporting beam (4) remote from the tractor, on a wheel carrier (10) pivotable between a transporting position and a working position and takes part of the machine weight, a supporting-wheel axle (12) for the supporting wheel (13), which axle is rotatable relative to the wheel carrier (20). and a fixing device (14, 15, 16, 17) for the supporting-wheel axle (12), the supporting wheel (13) being held in a self-steering manner by the supporting-wheel axle (12) in the working position of the working unit (7), and the supporting-wheel axle being fixable, on actuation of the fixing device (14, 15, 16, 17), by the fixing device in a defined position suitable for transporting travel with the working unit brought into the transporting position, **characterised in that** the fixing device (14, 15, 16, 17) has a hydraulic cylinder (16) for actuation, and **in that** between the control elements (6, 8) and the hydraulic cylinder (16) of the fixing device there is provided an operative connection which, with the locking device (18) released, actuates the fixing device when the working unit (7) is lifted.

2. Agricultural machine according to Claim 1, **characterised in that** the hydraulic cylinder (16) of the fixing device (14, 15, 16, 17) is connected to a hydraulic line for the control elements (8), designed as lifting cylinders, of the working unit (7), such that lifting loading pressure for the lifting cylinders (8) can be supplied to the hydraulic cylinder (16), which through the loading pressure actuates the fixing device so as to set and fix the supporting-wheel axle (12).

3. Agricultural machine according to Claim 2, **characterised in that** in a hydraulic connecting line from the lifting cylinders (8) to the hydraulic cylinder (16) of the fixing device (14, 15, 16, 17) there is arranged a control valve which frees an oil flow in both throughflow directions in the transporting position of the wheel arm (10), whereas in the working position of the wheel arm (10) it blocks the inflow to the hydraulic cylinder (16) but keeps free the oil outflow from the hydraulic cylinder (16).

4. Agricultural machine according to at least one of Claims 1 to 3, **characterised in that** the control valve is connected to an actuating device (24, 22, 23) of the locking device (18) countering the pivoting movement of the working unit (7) together with the supporting arm (3) relative to an attachment frame (1), such that when the locking device (18) is engaged the oil inflow to the hydraulic cylinder (16) is blocked but the oil outflow from the hydraulic cylinder (16) is possible, and that when the locking device is released the oil throughflow in both directions is possible.

5. Agricultural machine according to Claim 1, **characterised in that** the fixing device has two control rollers (15) which are offset by 180° on an articulated lever (14) on the supporting-wheel axle (12) and against which a pressure-exerting plate (17) connected to the hydraulic cylinder (16) can be pressed in order to set and fix the supporting-wheel axle (12) in the desired direction.

6. Agricultural machine according to Claim 1, **characterised in that** the wheel carrier (10) is lockable in its transporting position when the working unit (7) is lifted.

7. Agricultural machine according to at least one of Claims 1 to 6, **characterised in that** the wheel carrier (10) is pivotable by a hydraulically lockable hydraulic cylinder, and **in that** the hydraulic cylinder (11) is hydraulically lockable, preferably via a valve (26) precontrolled so as to be brought against spring force into a blocking position and situated in a working line to the hydraulic cylinder (11), the precontrol (29) of the valve (26) being connected via a pilot line (28) to the pressure supply (27) of the control elements (6) designed as lifting cylinders.

## Revendications

1. Machine agricole, en particulier faucheuse-moissonneuse, à atteler à un véhicule tracteur, avec une unité de travail (7), disposée de façon à pouvoir être levée par l'intermédiaire d'organes de réglage (6, 8), sur un support de faucheuse-moissonneuse (4), relié à au moins un bras support (3), avec un dispositif d'arrêt (18) désolidarisable pour fixer l'unité de travail (7) au bras support (3), en une position de travail latéralement à l'extérieur de la trace du véhicule tracteur, l'unité de travail relevée étant susceptible de pivoter pour le transport sur les routes publiques, autour d'un axe d'articulation (2) vertical, le pivotement se faisant vers l'arrière pour passer à une position de transport derrière le véhicule tracteur, avec au moins une roue d'appui (13), supportant une partie du poids de la machine et disposée sur un support de roue (10) susceptible de pivoter entre une position de transport et une position de travail, à l'extrémité, opposée au véhicule tracteur, du support de faucheuse-moissonneuse (4), avec un axe de roue d'appui (12) susceptible de tourner par rapport au support de roue (10), pour la roue d'appui (13), et avec un dispositif de fixation (14, 15, 16, 17) pour l'axe de roue d'appui (12), la roue d'appui (13), à la position de travail de l'unité de travail (7), étant maintenue en orientation libre avec l'axe de roue d'appui (12) et, lors de l'actionnement du dispositif de fixation (14, 15, 16, 17), l'axe de roue d'appui étant susceptible d'être fixé, à l'aide du dispositif de fixation, en une position convenant pour le roulage de transport avec l'unité de travail placée à la position de transport, **caractérisée en ce que** le dispositif de fixation (14, 15, 16, 17) présente pour l'actionnement un vérin hydraulique (16), et **en ce que**, entre les organes de réglage (6, 8) et le vérin hydraulique (16) du dispositif de fixation, est prévue une liaison fonctionnelle qui, lorsque le dispositif d'arrêt (18) est désolidarisé, actionne le dispositif de fixation lorsque l'unité de travail (7) est relevée.

2. Machine agricole selon la revendication 1, **caractérisée en ce que** le vérin hydraulique (16) du dispositif de fixation (14, 15, 16, 17) est relié à une conduite hydraulique pour les organes de réglage (8), réalisés sous la forme de vérins de relevage, de l'unité de travail (7), de sorte que la pression de sollicitation de relevage pour les vérins de relevage (8) peut être amenée au vérin hydraulique (16), qui, sous l'effet de la pression de sollicitation, actionne le dispositif de fixation dans le sens d'un réglage et d'une fixation de l'axe de roue d'appui (12).

3. Machine agricole selon la revendication 2, **caractérisée en ce que**, dans une conduite de liaison hydraulique, allant des vérins de relevage (8) au vérin hydraulique (16) du dispositif de fixation (14, 15, 16, 17), est disposée une soupape de commande, qui, à la position de transport de la console de roue (10) libère un écoulement d'huile dans les deux directions d'écoulement, alors que, par contre, à la position de travail de la console de roue (10), elle bloque l'amenée au vérin hydraulique (16) en maintenant cependant libre l'évacuation d'huile à la sortie du vérin hydraulique (16).

4. Machine agricole selon au moins l'une des revendications 1 à 3, **caractérisée en ce que** la soupape de commande est reliée à un dispositif d'actionnement (24, 22, 23) du dispositif d'arrêt (18), devant empêcher le mouvement de pivotement de l'unité de travail (7) avec le bras de support (3) par rapport à un châssis d'attelage (1), de manière que, lorsque le dispositif d'arrêt (18) est enclenché, l'amenée d'huile au vérin de travail (16) soit bloquée, alors que cependant l'évacuation d'huile hors du vérin d'huile (16) soit possible et que, lorsque le dispositif d'arrêt est désolidarisé, le passage d'huile dans les deux sens est possible.

5. Machine agricole selon la revendication 1, **caractérisée en ce que** le dispositif de fixation présente deux galets de commande (15) décalés de 180° sur un levier double (14) sur l'axe de roue d'appui (12), galets contre lesquels peut être pressée une plaque de pressage (17) reliée au vérin hydraulique (16) pour régler et fixer l'axe de roue d'appui (12) à l'orientation souhaitée.

6. Machine agricole selon la revendication 1, **caractérisée en ce que** le support de roue (10) est susceptible d'être bloqué à sa position de transport lorsque l'unité de travail (7) est relevée.

7. Machine agricole selon au moins l'une des revendications 1 à 6, **caractérisée en ce que** le support de roue (10) est susceptible de pivoter, au moyen d'un vérin hydraulique pouvant être bloqué hydrauliquement, et **en ce que** le vérin hydraulique (11) est susceptible d'être bloqué hydrauliquement, de préférence par l'intermédiaire d'une soupape (26) pilotée en une position de blocage, contre la force d'un ressort, la soupape (26) étant montée dans une conduite de travail allant au vérin hydraulique (11), pouvant être bloquée hydrauliquement, la commande de pilotage (29) de la soupape (26) étant reliée, par l'intermédiaire d'une conduite de pilotage (28), à l'alimentation en pression (27) des organes de réglage (6) réalisés sous la forme de vérins de relevage.
